# EUROPEAN PATENT SPECIFICATION

(11) **EP 2 435 184 B1**
(45) Date of publication and mention of the grant of the patent: **25.02.2015**
(21) Application number: 10722399.2
(22) Date of filing: 26.05.2010
(51) Int. Cl.: B01J 31/24

(54) **PROCESS FOR PREPARING A COMPLEX**
PROZESS ZUR HERSTELLUNG EINES KOMPLEXES
PROCEDE POUR LA PREPARATION D'UN COMPLEX

(30) Priority: 26.05.2009 GB 0908980
(43) Date of publication of application: 04.04.2012
(73) Proprietor: Johnson Matthey PLC, London EC4A 4AB (GB)
(72) Inventor: BARNARD, Christopher Francis James, Oxfordshire RG9 5QQ (GB); LI, Hongbo, Thorofare, New Jersey 08086 (US)
(74) Representative: Whitcombe, Nicole Jane
(86) International application number: PCT/GB2010/050860
(87) International publication number: WO 2010/136793

(56) References cited:
- WO-A1-02/48094
- FRYZUK ET AL: "Coordinatively unsaturated binuclear clusters of rhodium. The reactivity of [{iPr2P(CH2)nPiPr2}Rh]2(eta-H)2 (n = 2,3,and 4) with dihydrogen, and their use in the catalytic hydrogenation of olefins" CAN.J.CHEM., vol. 67, 31 December 1989 (1989-12-31), pages 883-896, XP002590221
- TANI ET AL: "Mechanistic aspects of catalytic hydrogenation of ketones by rhodium(I)-peralkyldiphosphine complexes" J. ORGANOMET. CHEM., vol. 279, 31 December 1985 (1985-12-31), pages 87-101, XP002590222
- FRYZUK ET AL: "Reactivity of electron-rich binuclear rhodium hydrides. Synthesis of bridging alkenyl hydrides and X-ray crystal structure" ORGANOMETALLICS, vol. 3, no. 2, 1 February 1984 (1984-02-01), pages 185-191, XP002590223
- RAEBIGER: "Using ligand bite angels to control the hydricity of palladium diphosphine complexes" J.AM.CHEM.SOC, vol. 126, 4 July 2004 (2004-07-04), pages 5502-5514, XP002590224
- WANG K ET AL: "Transfer-dehydrogenation of alkanes catalyzed by rhodium(I) phosphine complexes" JOURNAL OF ORGANOMETALLIC CHEMISTRY, ELSEVIER-SEQUOIA S.A. LAUSANNE, CH LNKD- DOI:10.1016/0022-328X(96)06116-5, vol. 518, no. 1, 12 July 1996 (1996-07-12), pages 55-68, XP004035859 ISSN: 0022-328X
- WERNER ET AL: "A new synthetic route to unsymmetrical 1,2-bis(phosphanyl)ethanes with and without a stereogenic center" ANGEW. CHEM. INT. ED., vol. 39, no. 3, 31 December 2000 (2000-12-31), pages 564-566, XP002590225 cited in the application
- LINDER ET AL: "Catalytic activity of cationic diphospalladium (II) complexes in the alkene/CO copolymerization in organic solvents and water in dependence on the length of the alkyl chain at the phosphine ligands" J. ORGANOMET.CHEM., vol. 602, 31 December 2000 (2000-12-31), pages 173-187, XP002590226
- KOLLAR ET AL: "NMR investigation of Pd(II)-Pd(0) reduction in the presence of mono- and ditertiary phosphines" INORGANICA CHIMICA ACTA, vol. 286, 31 December 1999 (1999-12-31), pages 93-97, XP002590227
- MORRIS ET AL: "Modification of ligand properties of phosphine ligands for C-C and C-N bond-forming reactions" TETRAHEDRON LETTERS, ELSEVIER, AMSTERDAM, NL LNKD- DOI:10.1016/J.TETLET.2006.12.027, vol. 48, no. 6, 11 January 2007 (2007-01-11), pages 949-953, XP005827148 ISSN: 0040-4039
- HEWERTSON W ET AL: "Preparation of di- and tri-tertiary phosphines" JOURNAL OF THE CHEMICAL SOCIETY, CHEMICAL SOCIETY, LETCHWORTH; GB, 1 January 1962 (1962-01-01), pages 1490-1494, XP008107945 ISSN: 0368-1769

## Description

The present invention concerns the preparation of metal complexes, in particular complexes which are useful in carbonylation reactions.

Compounds of the type PdX₂(PR₂(CH₂)ₙPR₂) are preferred catalysts for many types of carbonylation reactions of aryl and vinyl halides and sulfonates. As with many other organometallic compounds the standard method of preparation for these compounds is to prepare, isolate and purify the phosphine ligand and react it with a suitable metal precursor.

A major part of such preparations is the isolation and purification of the phosphine ligand. The ligand itself may be highly reactive and likely to suffer from oxidation, yielding the unreactive phosphine oxide as an impurity, so additional precautions such as the formation of an acid salt (e.g. using HBF₄) are needed to stabilise the ligand for storage and ease of handling.

There are few examples of preparative procedures for ligands PR₂(CH₂)PR₂ in the literature. One example relates to the preparation of ⁱPr₂P(CH₂)₃PⁱPr₂ (K. Tani et al, J. Organometallic Chem. 1985, 279, 87-101). The method recommends the reflux of a reaction mixture comprising ether and n-hexane as solvents for the completion of the reaction before the removal of solvents and distillation to isolate the product. The present inventor has found, however, that thermal decomposition of the product during distillation reduces the overall yield.

Alternative routes to these compounds exist, such as the photochemical hydrophosphination of primary phosphines H₂P(CH₂)₃PH₂ reported by Maier (Helvetica Chimica Acta, 1966, 49, 842) and Lindner et al (J. Organometallic Chem., 2000, 602, 173). This method is not applicable to all diphosphines and the latter group also report the preparation via Cl₂P(CH₂)₃PCl₂ by reaction with Grignard reagents to yield alkyl-substituted diphosphines (J. Organometallic Chem., 2000, 602, 173). However, these methods involve complex, often multi-step preparation and purification procedures and yield highly air-sensitive products.

Typical routes for the formation of Pd complexes are described by Lindner et al (J. Organometallic Chem., 2000, 602, 173). Combination of the diphosphine ligand with a palladium precursor such as PdCl₂(PhCN)₂ yields PdCl₂(R₂P(CH₂)ₙPR₂). Reaction with Pd(OAc)₂ can be used to prepare acetate complexes, although these compounds are reported to slowly decompose after the removal of solvents (Lindner et al., J. Organometallic Chem., 2000, 602, 173 and Z. Csakai et al., Inorg. Chim. Acta 1999, 286, 93).

The present inventors have now found that such complexes may be conveniently prepared without the isolation of the ligand. Efforts to adopt such procedures for the preparation of organometallic compounds have often proved ineffective due to incompatibilities between the various reagents. A method to avoid this has been developed using the synthesis described below. Through the method described, the ligand is prepared in high yield, excess reagents and by-products may be removed, and the ligand solution may then be conveniently reacted with a metal precursor solution to yield the desired catalyst.

Accordingly, the present invention provides a process for the preparation of a complex of formula (A) or (B): 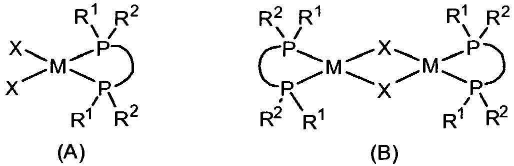 wherein,
M is a platinum group metal atom;
each X is an anionic monodentate ligand; 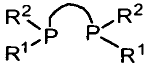 is a bidentate phosphine ligand; and
R¹ and R² are independently selected from the group consisting of straight-chain C₁₋₁₀ alkyl, branched-chain C₃₋₁₀ alkyl, C₃₋₁₀ cycloalkyl and optionally substituted aryl; comprising the steps of:
   (a) preparing 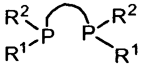 by reacting the lithium salt of R¹R²PH with a dihaloalkane in a solvent comprising an alkyl ether and, optionally, an alkane;
   (b) reacting 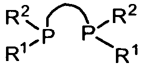 with a platinum group metal (PGM) precursor compound to form the complex of formula (A) or formula (B), wherein the 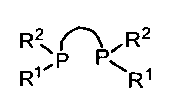 is not isolated before it is reacted with the platinum group metal precursor compound.

The platinum group metal atom M is preferably selected from the group consisting of ruthenium, rhodium, palladium, osmium, iridium and platinum. More preferably, M is selected from the group consisting of rhodium, palladium, iridium and platinum.

Each X is an anionic monodentate ligand which may be independently bonded in either a terminal or bridging mode. Preferably, each X is independently selected from the group consisting of chloride, bromide, iodide and acetate.

The bidentate phosphine ligand is prepared from the lithium salt of a secondary phosphine R¹R²PH i.e. R¹R²PLi. R¹ and R² are independently selected from the group consisting of straight-chain C₁₋₁₀ alkyl, branched-chain C₃₋₁₀ alkyl, C₃₋₁₀ cycloalkyl and optionally substituted aryl. The optionally substituted aryl may have substituents which are preferably selected from the group consisting of straight-chain C₁₋₁₀ alkyl, branched-chain C₃₋₁₀ alkyl, C₃₋₁₀ cycloalkyl and NR³R⁴. R³ and R⁴ are independently selected from the group consisting of straight-chain C₁₋₁₀ alkyl, branched-chain C₃₋₁₀ alkyl and C₃₋₁₀ cycloalkyl (for example, methyl, ethyl, n-propyl, i-propyl, n-butyl, i-butyl, t-butyl, cyclopentyl, cyclohexyl or norbornyl).

R¹ and R² may be the same or different and are preferably the same. In one embodiment, R¹ and R² are independently selected from the group consisting of methyl, ethyl, n-propyl, i-propyl, n-butyl, i-butyl, t-butyl, cyclopentyl, cyclohexyl, norbornyl and phenyl. More preferably, R¹ and R² are independently selected from the group consisting of i-propyl, i-butyl, t-butyl, cyclopentyl, cyclohexyl, norbornyl and phenyl.

The lithium salt of R¹R²PH may be prepared using methods known to the skilled person. For example, R¹R²PH may be reacted with an alkyl lithium reagent, such as n-BuLi or sec-BuLi, at a suitable concentration to form R¹R²PLi. The alkyl lithium reagent may be conveniently purchased as a solution in a solvent, such as hexane. The reaction between the alkyl lithium reagent and R¹R²PH is normally complete within about 0 to about 60 minutes and typically within about 30 minutes. The reaction mixture is optionally stirred for a further period of time of up to about 60 minutes and is optionally cooled before the lithium salt is combined with the dihaloalkane. When the reaction is conducted on a large scale it is preferable that the reaction mixture is cooled (e.g. with an ice/water bath) to avoid warming as a result of the exothermic reaction. Preferably, the reaction is conducted under an inert atmosphere, such as nitrogen or argon.

The dihaloalkane preferably has the formula Hal-(CR⁵R⁶)ₘ-Hal wherein Hal is a halide, preferably, chloride, bromide or iodide, m is 2, 3 or 4, and R⁵ and R⁶ are independently selected from the group consisting of H, straight-chain C₁₋₁₀ alkyl, branched-chain C₃₋₁₀ alkyl, and C₃₋₁₀ cycloalkyl. In one embodiment, the dihaloalkane is preferably 1,3-dichloropropane, 1,4-dichlorobutane or 1,3-dichlorobutane. In this instance, therefore, m is 3 or 4.

The lithium salt of R¹R²PH and the dihaloalkane are combined in a solvent comprising an alkyl ether and, optionally, an alkane. Preferably, the alkyl ether is anhydrous. In one embodiment, the alkyl ether is a cyclic alkyl ether and more preferably tetrahydrofuran (THF). In another embodiment, the alkyl ether is diethyl ether or methyl tert-butyl ether (MTBE). With regard to THF and MTBE, the use of alkyl ethers such as these is advantageous as THF and MTBE have higher flashpoint temperatures giving improved safety in handling.

Suitable alkanes have boiling points at atmospheric pressure between 0 to 150°C. The alkane is preferably anhydrous. Alkanes that may be used are low boiling alkanes such as pentane isomers, hexane isomers, heptane isomers or octane isomers. Preferably, the alkane is n-pentane, n-hexane or n-heptane.

The components may be mixed in any suitable order, although it is preferred that the dihaloalkane is added to a mixture of R¹R²PLi and the solvent as R¹R²PLi is often present as a precipitate. Preferably, the mixture is stirred for about 10 minutes to about 24 hours. Preferably, the reaction is conducted under an inert atmosphere, such as nitrogen or argon.

In one embodiment, the reaction is preferably carried out at one or more temperatures between about -10°C and about 40°C, in another embodiment, between about -10°C and about 35°C and, in yet another embodiment, between about -10°C and about 30°C. Studies of reaction mixtures comprising R¹R²PLi and the dihaloalkane using ³¹P NMR showed that formation of the diphosphine surprisingly occurs readily and cleanly at room temperature, indicating that impurities are formed on heating, which lead to reduced yield and formation of impurities in subsequent preparative steps. When the dihaloalkane is added to a mixture of R¹R²PLi and the solvent, therefore, the rate of addition is controlled in order to limit the temperature increase due to the exothermic reaction. Accordingly, when the reaction is conducted on a large scale, it is preferable that the reaction mixture is cooled (e.g. using an ice/water bath).

Once the bidentate phosphine ligand has been prepared, the reaction mixture obtained after step (a) may be reacted directly with the PGM precursor compound, although the presence of unwanted by-products, as well as the presence of excess alkyl lithium reagent, may result in contamination and a reduced yield of the complex of formula (A) or (B).

In one embodiment, the reaction mixture obtained after step (a) may be treated one or more times with water (preferably degassed water) and the aqueous layer(s) discarded. The treatment with water is advantageous as the unwanted by-products are removed with the aqueous layer(s) and the excess alkyl lithium reagent is destroyed, thus preventing reduction of the PGM precursor compound. In this embodiment, the amount of the alkyl lithium reagent is preferably in excess of the R¹R²PH, thus avoiding an excess of expensive R¹R²PH. Preferably, the molar ratio of the alkyl lithium reagent to R¹R²PH is ≥ 1:1 and in one embodiment is about 1.07:1. After the water wash, the remaining organic layer may then be combined with the PGM precursor compound if desired.

In another embodiment, the amount of the R¹R²PH is preferably in excess of the alkyl lithium reagent. This advantageously avoids an excess of alkyl lithium reagent with the result that the degradation of the PGM metal precursor compound is reduced. In addition, as no free alkyl lithium reagent is present, the water wash described above becomes unnecessary and the separation of phases is thus avoided. The process therefore becomes more volume efficient allowing a better throughput for manufacturing. Preferably, the molar ratio of the R¹R²PH to alkyl lithium reagent is ≥ 1:1, more preferably ≥ 1.1:1 and most preferably about 1.2:1. In this embodiment, the reaction mixture obtained after step (a) may be filtered through Celite^{™} and then added to the PGM precursor compound.

Whether the water wash or the use of excess R¹R²PH is chosen will depend on the economics of a particular process. However, regardless of the actual method selected, the avoidance of the need to isolate the pure bidentate phosphine ligand (for example, using vacuum distillation) makes these processes cost competitive.

The PGM precursor compound is reacted with the bidentate phosphine ligand to form the complex of formula (A) or formula (B). Preferably, the reaction is conducted under an inert atmosphere, such as nitrogen or argon. The reaction mixture is preferably stirred for a period of time of up to about 3 days. In one embodiment, the reaction is carried out at a temperature of less than about 40°C, in another embodiment, at a temperature of less than about 35°C and in yet another embodiment, at a temperature of less than about 30°C.

Preferably, the bidentate phosphine ligand is present in the reaction mixture in stoichiometric or excess molar quantities to the platinum group metal atom M. When the bidentate phosphine ligand is present in excess, it is calculated to provide a molar excess of preferably at least 1% over the amount required for the stoichiometric reaction.

Optionally, the PGM precursor compound may be present in combination with one or more solvents, such as ketones (e.g. acetone), alkyl ethers (for example, diethyl ether or MTBE, or cyclic alkyl ethers, such as tetrahydrofuran), aromatic hydrocarbons (e.g. toluene), alkyl cyanides (e.g. acetonitrile) or aryl cyanides (e.g. benzonitrile). In this embodiment, the solvent is selected such that the PGM precursor compound is soluble or partially soluble in the solvent whereas the complex of formula (A) or formula (B) has a limited solubility. Preferably, the solvent is degassed prior to combining it with the PGM precursor compound. In one embodiment, the PGM precursor compound is present in the solvent in a ratio of at least about 1mmol PGM precursor compound per 1.6ml of solvent and, in another embodiment, at least about 1 mmol of PGM precursor compound per 5 ml of solvent.

The PGM precursor compound may be selected from the group consisting of MX₂, MX₂Lₙ and [MXLₙ]₂, wherein M and X are as defined above, and when n is 1, L is a neutral bidentate ligand, or when n is 2, L is a neutral monodentate ligand. Neutral bidentate ligands include diolefins, more preferably cyclic diolefins, such as 2,5-norbornadiene (NBD) or 1,5-cyclooctadiene (COD). Neutral monodentate ligands include olefins, such as ethylene, C₅₋₁₀ cycloalkenes, such as cyclooctene, or solvent molecules, such as acetonitrile. Examples of MX₂, MX₂Lₙ and [MXLₙ]₂ complexes include Pd(OAc)₂, PdCl₂, PdCl₂(COD), PdBr₂(COD), PdCl₂(MeCN)₂, PtCl₂(MeCN)₂, [IrCl(COD)]₂ and [RhCl(NBD)]₂.

The method of the present invention is advantageous as heating at temperatures greater than about 40°C may be avoided at all stages i.e. during the formation of the lithium salt of R¹R²PH, the bidentate phosphine ligand and the complexes of formulae (A) and (B). In a preferred embodiment, step (a) and step (b) are independently carried out at one or more temperatures between about -10°C and about 40°C. The method therefore is suited to large-scale manufacture and the complexes obtained are very pure.

In another embodiment, the process of the present invention further comprises the step of preparing a complex of formula (A') or formula (B'): 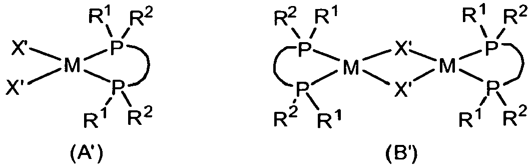 by independently exchanging one or more of the groups X for X',
wherein each X' is an anionic monodentate ligand which is different to the corresponding group X in the complex of formula (A) or formula (B).

The anion exchange may be conveniently carried by combining the complex of formula (A) or formula (B) with a YX' salt, wherein Y is an alkali metal cation (such as K⁺ or Na⁺) and X' is as defined above, in a solvent. The components may be combined in any suitable order, although it is preferred that the complex of formula (A) or formula (B) is combined with the YX' salt, followed by the addition of the solvent. Examples of suitable YX' salts include NaBr and Nal. Examples of suitable solvents include include ketones, such as acetone. Preferably, the anion exchange is conducted under an inert atmosphere (such as argon or nitrogen).

In another aspect, the present invention provides a complex of formula (A), (B), (A') or (B') obtainable according to the processes as defined above.

On completion of the reaction, the complexes of formulae (A), (B), (A') or (B') may be separated from the reaction mixture by any appropriate method which is dependent on the physical form of the product. In particular, solid complexes may be recovered from the supernatant by filtering, decanting or centrifuging and optionally washed one or more times. If purification is necessary, the complexes may be obtained in high purity by conventional methods.

Howsoever the complex is recovered, the separated complex is preferably dried. Drying may be performed using known methods, for example, drying under an air stream or at temperatures in the range of 10-60°C and preferably 20-40°C under 0.1-30 mbar for 1 hour to 5 days.

The complexes prepared by the processes of the present invention are pure and may be used in catalytic applications as obtained or further dried.

The invention will be further illustrated by reference to the following non-limiting Examples.

### Examples

The complexes were prepared using fresh reagents in an argon glove box.

### Example 1: Preparation of PdCl₂(dcpp)

Di-cyclohexylphosphine (10% solution in hexane) (44ml, 2.96g PHCy₂, 15mmol) was transferred to a 100ml 3-necked flask under argon. Anhydrous THF (20ml) was added. n-Butyl lithium (1.6M in hexane, 10ml, 16mmol) was added by syringe. The solution turned yellow/green but there was no immediate warming or precipitation. A pale precipitate began to form after a few minutes. Stirring was continued for 60 minutes, then 1,3-dichloropropane (0.70ml, density 1.19, 7.4mmol) was added slowly by pipette. Stirring was continued for 60 minutes.

Filter degassed water (10ml) was added and the mixture shaken until all the solid had dissolved. The aqueous layer was removed. A second water wash (10ml) was carried out and the organic phase was added to [PdCl₂(COD)] (2.0g, 7.4mmol) in 50ml acetone, degassed.

The remaining suspended starting material began to dissolve and then a pale precipitate began to form. The mixture was stirred under argon overnight. The solid was collected by filtration and washed with hexane fraction. The powder was dried in an air stream.
Yield: 3.88g (F.wt 613.7, 6.33mmol, 85.5%)

The filtered solvent was evaporated to dryness and then triturated with hexane, and then toluene to yield a powder that was collected by filtration and dried in air.
Yield: 0.15g (3.3% yield)

### Example 2: Preparation of PdCl₂(dcpp)

The preparation of the complex was carried out under an inert atmosphere.

Di-cyclohexylphosphine (44ml, 21.44g PHCy₂, 108mmol) was loaded in a Schlenk flask, 20ml anhydrous hexane and 40 ml anhydrous THF were transferred into the flask. Under ice/water bath, n-Butyl lithium (1.6M in hexane, 56ml, 90mmol) was added by syringe. A pale precipitate began to form after a few minutes. Stirring was continued for 60 minutes under room temperature, then 1,3-dichloropropane (4ml, 42mmol) was added slowly by syringe under water/ice bath. Stirring was continued for 60 minutes under room temperature. The reaction mixture was then filtered with a frit covered with Celite (3g). The filtrate was added into [PdCl₂(COD)] (10.84g, 38mmol) suspended in 60ml degassed acetone. The remaining suspended starting material began to dissolve and then a pale precipitate began to form. The mixture was stirred under argon for 1.5 hours. The solid was collected by filtration and washed with 3x25ml acetone and 20ml hexane. The powder was dried under vacuum. Yield: 22.9g (F.wt 613.7, 37.3mmol, 98%)

### Example 3: Preparation of PdCl₂(ⁱPrP(CH₂)₃PⁱPr₂)

Di-i-propylphosphine (10% solution in hexane) (9.8ml, 0.59g PHⁱPr₂, 5mmol) was transferred to a 100ml 3-necked flask under argon and dry THF (5ml) added. n-Butyl lithium (1.6M in hexane, 3.1 ml, 5mmol) was added by syringe. The solution turned pale green but remained clear on stirring at room temperature. After ca. 20 minutes the mixture was cooled using an ice bath and some pale solid precipitated. 1,3-Dichloropropane (0.237ml, 2.5mmol) was added by pipette. Stirring was continued at 10°C for 10 minutes and then the reaction was allowed to warm to room temperature. The white suspension was stirred for 3 hours.

Degassed water (5ml) was added and the mixture shaken until all the solid had dissolved. The solution was then transferred to a separating funnel and the aqueous layer removed. The organic phase was added to [PdCl₂(COD)] (0.71g, 2.5mmol) in 20ml acetone.

There was a rapid reaction and a pale precipitate formed. The mixture was stirred overnight. The solid was collected by filtration and washed with acetone. The powder was dried in an air stream.
Yield: 1.00g 88%

A second small amount was recovered from the filtrate/wash liquor - 0.09g; Total yield ca. 97%

### Example 4: Preparation of Pd(OAc)₂(dcpp)

Di-cyclohexylphosphine (10% solution in hexane) (44ml, 2.96g PHCy₂, 15mmol) was transferred to a 100ml 3-necked flask under argon. Anhydrous THF (20ml) was added. n-Butyl lithium (1.6M in hexane, 10ml, 16mmol) was added by syringe. The solution turned yellow/green but there was no immediate warming or precipitation. A pale precipitate began to form after a few minutes. Stirring was continued for 30 minutes, and then the solution was cooled using an ice bath. After another 30 minutes 1,3-dichloropropane (0.70ml, density 1.19, 7.4mmol) was added slowly by pipette. Stirring was continued for 2 hours.

Filter degassed water (20ml) was added and the mixture shaken until all the solid had dissolved. The aqueous layer was removed. The organic phase was added to [Pd(OAc)₂] (1.659g, 7.4mmol) in 50ml acetone, degassed.

The mixture darkened to give a deep red solution with minimal solid. After stirring overnight this was transferred to a Buchi flask and evaporated under reduced pressure to give a red oil. This was stirred with hexane (ca. 100ml) which was then decanted. This was repeated three times, finally stirring for 18 hours to give a pale yellow solid. The sample was chilled in the freezer before filtration. The solid was collected by filtration and dried in air and in vacuo.
Yield: 3.8g (F.wt 661, 77% yield)

A similar preparation was carried out using toluene as solvent for Pd(OAc)₂ but in this case isolation was less effective (isolated yield 21%)

### Example 5: Preparation of Pd(OAc)₂(Cy₂PCH₂CH₂CH(CH₃)PCy₂)

A solution of PCy₂H in hexane (10wt%, 11ml, 3.75mmol) was transferred by syringe to a 100ml round-bottomed flask. Anhydrous THF (ca. 5ml) was added and then n-BuLi (2.5ml, 1.6M in hexane, 4mmol). The mixture was stirred for ca. 30 minutes at room temperature during which time a pale precipitate formed.

1,3-Dichlorobutane (211 microlitres, 1.85mmol) was added by pipette and stirring continued at room temperature for ca. 24 hours. The originally pale-green suspension became white.

Water (ca. 5ml) was added and the mixture shaken to dissolve the precipitate and react excess lithium reagent. The aqueous phase was removed and the organic phase added to palladium acetate (0.414g, 1.85mmol) in acetone (ca. 20ml). The mixture was stirred for 24 hours giving a deep red solution with a very small amount of suspended solid. The solution was filtered and the filtrate evaporated under reduced pressure to give an oil. This was redissolved in toluene and again evaporated to remove some of the water. The oil was then triturated with hexane. The organic solution was removed and the trituration repeated. Finally, the thick paste was dissolved in toluene and hexane added to give a cloudy solution. After stirring briefly at room temperature, initiating the formation of solid, the solution was placed in the freezer overnight. After warming to room temperature the solid was collected by filtration and dried in air.
Yield: 0.225g

The filtrate was re-evaporated to low volume and again diluted with hexane and stored in the freezer to yield a second crop.
Yield: 0.132g

### Example 6: Preparation of PdCl₂(ⁱBu₂P(CH₂)₃PⁱBu₂)

Di-i-butylphosphine (10% solution in hexane) (22ml, 1.46g PHiBu₂, 10mmol) was transferred to a 100ml 3-necked flask under argon. Anhydrous THF (5ml) was added. n-Butyl lithium (1.6M in hexane, 6.3ml, 10mmol) was added by syringe. The pale green solution was stirred for 20 minutes and then cooled using an ice bath. There was no precipitate. 1,3-Dichloropropane (0.475ml, 5.0mmol) was added by pipette. This caused the immediate formation of a pale precipitate. Stirring was continued for ca. 3 hours as the reaction was allowed to warm to ambient temperature.

Filtered, degassed water (10ml) was added and the mixture shaken until all the solid had dissolved. The solution was then transferred to a separating funnel and the aqueous layer removed. The organic phase was added to [PdCl₂] (0.88g) in MeCN (20ml) previously heated to reflux for 1 hour.

A pale green solution was formed but there was no precipitation. Two liquid phases remained so the mixture was stirred vigorously over a weekend to allow reaction to occur. No precipitate was formed.

The mixture was evaporated under reduced pressure, which caused the product to precipitate. The solid was re-suspended in hexane fraction and stirred. The mixture was then filtered and the product dried in an air stream.
Yield: 2.45g [PdCl₂(di-i-bpp)] (96%)

### Example 7: Preparation of PdCl₂(Cy₂P(CH₂)₄PCy₂)

Di-cyclohexylphosphine (10% solution in hexane) (22ml, 1.48g PHCy₂, 7.5mmol) was transferred to a 100ml 3-necked flask under argon. Anhydrous THF (8ml) was added. n-Butyl lithium (1.6M in hexane, 5ml, 8mmol) was added by syringe. There was some initial clouding but no immediate warming or precipitation. A pale precipitate was formed on stirring for a few minutes. Stirring was continued while cooling in an ice bath. The reaction was cooled to ca. 5°C and then 1,4-dichlorobutane (0.41ml, 3.7mmol) was added by pipette. Stirring was continued in the ice bath for 10 minutes and then the reaction was allowed to warm to room temperature. Stirring was continued for 4 hours.

Filter degassed water (10ml) was added and the mixture shaken until all the solid had dissolved. The aqueous layer was removed and the organic phase was added to [PdCl₂(MeCN)₂] solution/suspension, which was prepared by heating 0.62g (3.5mmol) PdCl₂ in 20ml MeCN for 1 hour.

The remaining suspended starting material began to dissolve and very slowly a pale precipitate began to form. The mixture was stirred under argon overnight.

The solid was collected by filtration and washed with acetone. The powder was dried in an air stream.
Yield: 1.837g (83.6%, based on Pd) [PdCl₂(dcpb)]

### Example 8: Preparation of PdBr₂(dcpp)

PdCl₂(dcpp) (0.3g) and sodium bromide (0.3g) were weighed into a flask. Under argon 10ml acetone (10ml) was added and the mixture stirred for 2 days. The suspension was diluted with water (ca. 10ml) and then filtered. The product was washed with water and methanol and dried in vacuo.
Yield: 0.306g

Samples of complexes PdX₂(diphosphine) may also be prepared by use of a Pd precursor containing the appropriate halide. Thus, for example, bromide complexes can be prepared using PdBr₂(COD).

### Example 9: Preparation of Pdl₂(dcpp)

PdCl₂(dcpp) (0.3g) and sodium iodide (0.3g) were weighed into a flask. Under argon 10ml acetone (10ml) was added and the mixture stirred for 2 days. The suspension was diluted with water (ca. 10ml) and then filtered. The product was washed with water and methanol and dried in vacuo.
Yield: 0.347g

### Example 10: Preparation of [RhCl(dcpp)]₂

Di-cyclohexylphosphine (10% solution in hexane, 11ml, 0.74g PHCy₂, 3.75mmol) was transferred to a 100ml 3-necked flask under argon. Anhydrous THF (5ml) was added. n-Butyl lithium (1.6M in hexane, 2.5ml, 4mmol) was added by syringe. The solution turned yellow/green but there was no immediate warming or precipitation. A pale precipitate began to form after a few minutes. Stirring was continued for 50 minutes, then 1,3-dichloropropane (0.18ml, density 1.19, 1.89mmol) was added slowly by pipette. Stirring was continued for 3 hours.

The solution was then transferred to a separating funnel and filter degassed water (5ml) was added and the mixture shaken until all the solid had dissolved. The aqueous layer was removed. The organic phase was added to [RhCl(nbd)]₂ (0.426g, 0.925mmol dimer) in 10ml acetone, degassed.

The remaining suspended starting material began to dissolve and then a pale precipitate began to form rapidly. The mixture was stirred under argon overnight. The solid was collected by filtration and washed with hexane fraction. The powder was dried in an air stream.
Yield: 0.917 g (F.wt 1150, 0.798mmol, 86%)

### Example 11: Preparation of [IrCl(dcpp)]₂ and PtCl₂(dcpp)

Di-cyclohexylphosphine (10% solution in hexane, 22ml, 1.48g PHCy₂, 7.5mmol) was transferred to a 100ml 3-necked flask under argon. Anhydrous THF (10ml) was added. n-Butyl lithium (1.6M in hexane, 5ml, 8mmol) was added by syringe. The solution turned yellow/green but there was no immediate warming or precipitation. A pale precipitate began to form after a few minutes. Stirring was continued for 10 minutes, then the solution was cooled using an ice bath. After 40 minutes, 1,3-dichloropropane (0.36ml, density 1.19, 3.78mmol) was added by pipette. The ice bath was removed and the mixture was stirred overnight.

The solution was then transferred to a separating funnel and filter degassed water (10ml) was added and the mixture shaken until all the solid had dissolved. The aqueous layer was removed. The organic phase was separated into two equal portions and added to:
1. [IrCl(COD)]₂ 0.62g, 0.925mmol dimer in 20ml acetone, degassed
2. [PtCl₂(MeCN)₂] 0.64g 1.85mmol in 20ml acetone, degassed

The remaining suspended starting material began to dissolve and then a pale precipitate began to form (white for platinum, pale brown for Ir). The mixtures were stirred under argon overnight. The solids were collected by filtration and washed with hexane fraction. The powders were dried in an air stream.
Yield: 1.028g (F.wt. 1328, 0.775mmol, 84%)
Yield: 1.106g (F. wt. 703, 1.575mmol, 85%)

### Example 12: Preparation of PdCl₂(dⁱppp) and PdBr₂(dⁱppp)

Di-i-propylphosphine (10% solution in hexane) (25ml, 1.7g PHⁱPr₂, 14.4mmol) was transferred to a 100ml 3-necked flask under argon and dry diethyl ether (10ml) added. n-Butyl lithium (1.6M in hexane, 10ml, 16mmol) was placed in a pressure-equalized dropping funnel. The BuLi was added dropwise. The solution turned pale green and then some solid precipitated. The solution was allowed to stir for ca. 20 minutes after complete addition and then the flask was cooled in an ice bath. The flask was then cooled to 10°C and 1,3-dichloropropane (0.67ml, 7mmol) was added by pipette. Stirring was continued at 10°C for 30 minutes and then the reaction was transferred from the glove box for heating to reflux for 90 minutes and allowed to cool. The sample was returned to the glove box.

Filter degassed water (5ml) was added and the mixture shaken until all the solid had dissolved. The solution was then transferred to a separating funnel and the aqueous layer removed. The organic phase was separated into 2 portions (ca. 20ml each) and added to:
1. [PdCl₂(COD)] 1.0g, 3.5mmol in 25ml acetone
2. [PdBr₂(COD)] 1.31g, 3.5mmol in 25ml acetone

There was a rapid reaction and pale precipitates were formed. The mixtures were stirred overnight. The solid was collected by filtration and washed with acetone. The powder was dried in an air stream.
Yield:
[PdCl₂(d-i-ppp)] 1.44g (ca. 90% yield)
[PdBr₂(d-i-ppp)] 1.39g (ca. 73% yield)

### Analytical data

### Elemental Analysis^{a}

| **Compound^{c,d}** | | **Pd** | **Cl** | **P** | **C** | **H** |
|---|---|---|---|---|---|---|
| PdCl₂(dⁱppp) | Exp | 23.46 | 15.63 | 13.66 | 39.68 | 7.56 |
| | Found | | 16.03 | | 39.81 | 7.65 |
| PdCl₂(dⁱppb) | Exp | 22.75 | 15.16 | 13.25 | 41.06 | 7.76 |
| | Found | | 15.23 | | 40.76 | 7.36 |
| PdCl₂(dⁱbpp) | Exp | 20.88 | 13.91 | 12.16 | 44.74 | 8.31 |
| | Found | | 14.18 | | 44.72 | 8.60 |
| PdCl₂(d^{t}bpp) | Exp | 20.88 | 13.91 | 12.16 | 44.74 | 8.31 |
| | Found | | 14.08 | | 45.03 | 8.38 |
| PdCl₂(d^{t}bpb) | Exp | 20.32 | 13.54 | 11.83 | 45.83 | 8.47 |
| | Found | | 13.81 | | 44.80 | 8.06 |
| PdCl₂(dcpp) | Exp | 17.34 | 11.55 | 10.09 | 52.79 | 8.21 |
| | Found | | 11.62 | | 52.93 | 8.04 |
| PdCl₂(dcpb) | Exp | 16.95 | 11.29 | 9.87 | 53.53 | 8.35 |
| | Found | | 11.81 | | 52.95 | 8.07 |
| PdCl₂(d(cyp)pp) | Exp | 19.08 | 12.71 | 11.11 | 49.49 | 7.59 |
| | Found | | 12.32 | | 50.07 | 7.83 |
| PdCl₂(d(cyp)pb) | Exp | 18.61 | 12.40 | 10.84 | 50.38 | 7.76 |
| | Found | | 11.94 | | 51.79 | 7.93 |
| PdCl₂(d(nbn)pp) | Exp | 16.08 | 10.71 | 9.36 | 56.22 | 7.62 |
| | Found | | 10.81 | | 56.28 | 7.68 |
| PdBr₂(dⁱppp) | Exp | 19.61 | 29.47 | 11.42 | 33.18 | 6.32 |
| | Found | | 29.10 | | 33.73 | 6.41 |
| PdBr₂(d^{t}bpp) | Exp | 17.78 | 26.72 | 10.35 | 38.09 | 7.07 |
| | Found | | 26.68 | | 38.06 | 7.01 |
| PdBr₂(d^{t}bpb) | Exp | 17.37 | 26.10 | 10.11 | 39.18 | 7.24 |
| | Found | | 25.95 | | 39.24 | 7.19 |
| PdBr₂(d^{t}bpp) | Exp | 17.78 | 26.72 | 10.35 | 38.09 | 7.07 |
| | Found | | 26.78 | | 38.81 | 7.39 |
| PdBr₂(dⁱppb) | Exp | 19.12 | 28.73 | 11.13 | 34.50 | 6.52 |
| | Found | | 28.50 | | 34.35 | 6.44 |

| | | | | | | |
|---|---|---|---|---|---|---|
| Data provided by Analytical Service, Strathclyde University, UK. ³¹P NMR spectral data for bisphosphine palladium catalysts^{a} | | | | | | |

| **Formula^{c,d}** | **δ/ppm** |
|---|---|
| PdCl₂(dppp) | 11.8 |
| PdBr₂(dppp) | 8.2 |
| PdCl₂(dⁱppp) | 37.7 |
| PdBr₂(dⁱppp) | 36.4 |
| PdBr₂(dⁱbpp) | 9.3 |
| PdBr₂(d^{t}bpp) | 42.1 |
| PdCl₂(d(cyp)pp) | 24.6 |
| PdCl₂(dcpp) | 33.2 |
| PdCl₂(d(nbn)pp) | m, 29-34^{b} |
| PdCl₂(dppb) | 29.2 |
| PdBr₂(dⁱppb) | 51.4 |
| PdBr₂(d^{t}bpb) | 41.2 |
| PdCl₂(d(cyp)pb) | 39.0 |

| | |
|---|---|
| ^{a} Values reported relative to 85% H₃PO₄ in external capillary. Spectra recorded at 109.365MHz. Samples prepared as saturated solutions in deuterochloroform. ^{b} Complex multiplet due to presence of exo-and endo-isomers. ^{c} The complexes listed were made according to the procedures detailed in Examples 1, and 3 to 12. ^{d} dppp = bis(diphenylphosphanyl)propane d'ppp = bis(di-isopropylphosphanyl)propane d'bpp = bis(di-isobutylphosphanyl)propane d^{t}bpp = bis(di-tertiary-butylphosphanyl)propane dcpp = bis(dicyclohexylphosphanyl)propane d(cyp)pp = bis(dicyclopentylphosphanyl)propane d(nbn)pp = bis(dinorbornylphosphanyl)propane dcpb = bis(dicyclohexylphosphanyl)butane dppb = bis(diphenylphosphanyl)butane dⁱppb = bis(di-isopropylphosphanyl)butane d^{t}bpb = bis(di-tertiary-butylphosphanyl)butane d(cyp)pb = bis(dicyclopentylphosphanyl)butane | |

## Claims

1. A process for the preparation of a complex of formula (A) or (B): 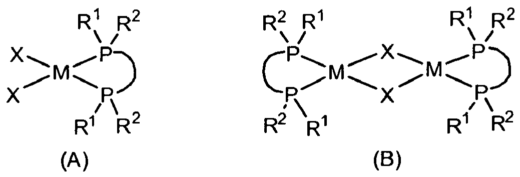 wherein,
M is a platinum group metal atom;
each X is an anionic monodentate ligand; 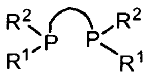 is a bidentate phosphine ligand; and
R¹ and R² are independently selected from the group consisting of straight-chain C_{I}-₁₀ alkyl, branched-chain C₃₋₁₀ alkyl, C₃₋₁₀ cycloalkyl and optionally substituted aryl;
comprising the steps of:
(a) preparing 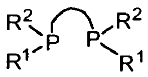 by reacting the lithium salt of R¹R²PH with a dihaloalkane in a solvent comprising an alkyl ether and, optionally, an alkane;
(b) reacting 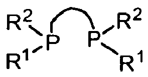 with a platinum group metal precursor compound to form the complex of formula (A) or formula (B), wherein the 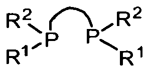 is not isolated before it is reacted with the platinum group metal precursor compound.

2. A process according to claim 1, wherein M is selected from the group consisting of ruthenium, rhodium, palladium, osmium, iridium and platinum.

3. A process according to claim 1 or claim 2, wherein each X is independently selected from the group consisting of chloride, bromide, iodide and acetate.

4. A process according to any one of claims 1 to 3, wherein R¹ and R² are independently selected from the group consisting of methyl, ethyl, n-propyl, i-propyl, n-butyl, i-butyl, t-butyl, cyclopentyl, cyclohexyl, norbornyl and phenyl.

5. A process according to any one of claims 1 to 4, wherein the alkyl ether is a cyclic alkyl ether, preferably tetrahydrofuran.

6. A process according to any one of claims 1 to 4, wherein the alkyl ether is diethyl ether or methyl tert-butyl ether.

7. A process according to any one of claims 1 to 6, wherein the alkane has a boiling point at atmospheric pressure between about 0°C and about 150°C.

8. A process according to any one of claims 1 to 7, wherein the alkane is selected from the group consisting of pentane isomers, hexane isomers, heptane isomers and octane isomers.

9. A process according to any one of claims 1 to 8, wherein the platinum group metal precursor compound is selected from the group consisting of MX₂, MX₂Lₙ and [MXLₙ]₂, wherein M and X are as defined in claim 1, and
when n is 1, L is a neutral bidentate ligand, or
when n is 2, L is a neutral monodentate ligand.

10. A process according to any one of claims 1 to 9, wherein step (a) and step (b) are independently carried out at one or more temperatures between about -10°C and about 40°C.

11. A process according to any one of claims 1 to 8, wherein after step (a), the process further comprises:
(a') treating the reaction mixture one or more times with water.

12. A process according to any one of claims 1 to 11, further comprising the step of preparing a complex of formula (A') or formula (B'): 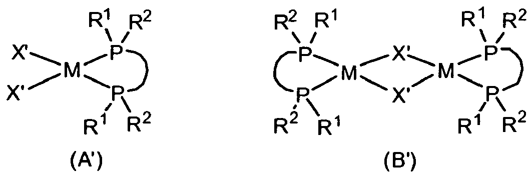 by independently exchanging one or more of the groups X for X',
wherein each X' is an anionic monodentate ligand which is different to the corresponding group X in the complex of formula (A) or formula (B).

13. A process according to any one of the preceding claims, wherein the dihaloalkane has the formula Hal-(CR⁵R⁶)ₘ-Hal,
wherein Hal is a halide,
m is 2, 3 or 4, and
R⁵ and R⁶ are independently selected from the group consisting of H, straight-chain C₁₋₁₀ alkyl, branched-chain C₃₋₁₀ alkyl, and C₃₋₁₀ cycloalkyl.

14. A process according to claim 13, wherein the dihaloalkane is selected from the group consisting of 1,3-dichloropropane, 1,4-dichlorobutane and 1,3-dichlorobutane.

## Patentansprüche

1. Verfahren zur Herstellung eines Komplexes nach Formel (A) oder (B): 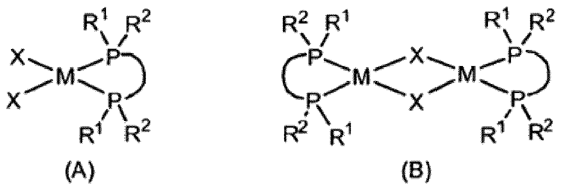 wobei
M ein Atom eines Platingruppenmetalls ist;
jedes X ein anionischer einzähniger Ligand ist; 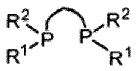 ein zweizähniger Phosphinligand ist; und
R¹ und R² unabhängig voneinander aus der Gruppe ausgewählt sind, die aus geradkettigem C₁₋₁₀-Alkyl, verzweigtkettigem C₃₋₁₀-Alkyl, C₃₋₁₀-Cycloalkyl und möglicherweise substituiertem Aryl besteht;
wobei es die folgenden Schritte umfasst:
(a) Herstellen von 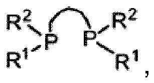 indem das Lithiumsalz von R¹R²PH in einem Lösungsmittel, das einen Alkylether und möglicherweise ein Alkan umfasst, mit einem Dihalogenalkan umgesetzt wird;
(b) Umsetzen von 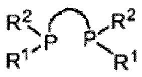 mit einer Verbindung, die eine Vorstufe eines Platingruppenmetalls ist, um den Komplex nach Formel (A) oder Formel (B) zu bilden, wobei 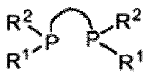 vor seiner Umsetzung mit der Verbindung, die eine Vorstufe eines Platingruppenmetalls ist, nicht isoliert wird.

2. Verfahren nach Anspruch 1, wobei M aus der Gruppe ausgewählt ist, die aus Ruthenium, Rhodium, Palladium, Osmium, Iridium und Platin besteht.

3. Verfahren nach Anspruch 1 oder Anspruch 2, wobei jedes X auf unabhängige Weise aus der Gruppe ausgewählt ist, die aus Chlorid, Bromid, lodid und Acetat besteht.

4. Verfahren nach einem beliebigen der Ansprüche 1 bis 3, wobei R¹ und R² unabhängig voneinander aus der Gruppe ausgewählt sind, die aus Methyl, Ethyl, n-Propyl, i-Propyl, n-Butyl, i-Butyl, t-Butyl, Cyclopentyl, Cyclohexyl, Norbornyl und Phenyl besteht.

5. Verfahren nach einem beliebigen der Ansprüche 1 bis 4, wobei es sich bei dem Alkylether um einen zyklischen Alkylether, vorzugsweise um Tetrahydrofuran, handelt.

6. Verfahren nach einem beliebigen der Ansprüche 1 bis 4, wobei es sich bei dem Alkylether um Diethylether oder Methyl-tert.-butylether handelt.

7. Verfahren nach einem beliebigen der Ansprüche 1 bis 6, wobei das Alkan bei Atmosphärendruck einen Siedepunkt zwischen ungefähr 0 °C und ungefähr 150 °C hat.

8. Verfahren nach einem beliebigen der Ansprüche 1 bis 7, wobei das Alkan aus der Gruppe ausgewählt ist, die aus Pentanisomeren, Hexanisomeren, Heptanisomeren und Octanisomeren besteht.

9. Verfahren nach einem beliebigen der Ansprüche 1 bis 8, wobei die Verbindung, die eine Vorstufe eines Platingruppenmetalls ist, aus der Gruppe ausgewählt ist, die aus MX₂, MX₂Lₙ und [MXLₙ]₂ besteht, wobei M und X den Begriffsbestimmungen in Anspruch 1 entsprechen, und
L ein neutraler zweizähniger Ligand ist, wenn n gleich 1 ist, oder
L ein neutraler einzähniger Ligand ist, wenn n gleich 2 ist.

10. Verfahren nach einem beliebigen der Ansprüche 1 bis 9, wobei der Schritt (a) und der Schritt (b) unabhängig voneinander bei einer oder mehreren Temperaturen zwischen ungefähr -10 °C und ungefähr 40 °C durchgeführt werden.

11. Verfahren nach einem beliebigen der Ansprüche 1 bis 8, wobei das Verfahren nach dem Schritt (a) weiterhin Folgendes umfasst:
(a') ein- oder mehrmaliges Behandeln der Reaktionsmischung mit Wasser.

12. Verfahren nach einem beliebigen der Ansprüche 1 bis 11, welches weiterhin den Schritt des Herstellens eines Komplexes nach Formel (A') oder Formel (B') umfasst. 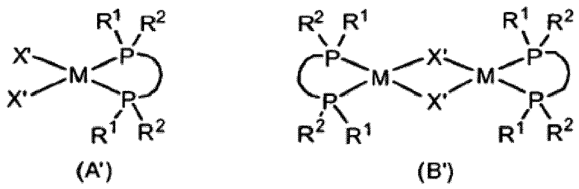 indem eine oder mehrere der Gruppen X auf unabhängige Weise durch X' ersetzt werden,
wobei jedes X' für einen anionischen einzähnigen Liganden steht, der sich von der entsprechenden Gruppe X in dem Komplex nach Formel (A) oder Formel (B) unterscheidet.

13. Verfahren nach einem beliebigen der vorhergehenden Ansprüche, wobei das Dihalogenalkan die Formel Hal-(CR⁵R⁶)ₘ-Hal aufweist,
wobei Hal ein Halogenid ist,
m gleich 2, 3 oder 4 ist, und
R⁵ und R⁶ unabhängig voneinander aus der Gruppe ausgewählt sind, die aus H, geradkettigem C₁₋₁₀-Alkyl, verzweigtkettigem C₃₋₁₀-Alkyl und C₃₋₁₀-Cycloalkyl besteht.

14. Verfahren nach Anspruch 13, wobei das Dihalogenalkan aus der Gruppe ausgewählt ist, die aus 1,3-Dichlorpropan, 1,4-Dichlorbutan und 1,3-Dichlorbutan besteht.

## Revendications

1. Procédé pour la préparation d'un complexe répondant à la formule (A) ou (B) : 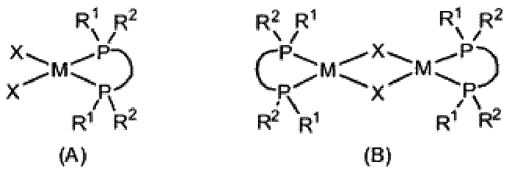 dans laquelle
M représente un atome métallique du groupe du platine ;
chaque X représente un ligand anionique monodenté ; 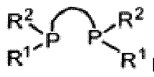 représente un ligand de phosphine bidenté ; et
R¹ et R² sont choisis, de manière indépendante, parmi le groupe constitué par un groupe alkyle en C₁-C₁₀ à chaîne droite, un groupe alkyle en C₃-C₁₀ à chaîne ramifiée, un groupe cycloalkyle en C₃-C₁₀ et un groupe aryle substitué de manière facultative ;
comprenant les étapes dans lesquelles :
(a) on prépare le 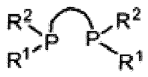 en faisant réagir le sel de lithium de R¹R²PH avec un dihalogénoalcane dans un solvant comprenant un éther alkylique et, de manière facultative, un alcane ;
(b) on fait réagir le 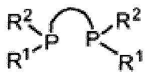 avec un composé précurseur d'un métal du groupe du platine pour obtenir le complexe répondant à la formule (A) ou à la formule (B), le 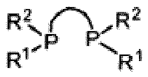 n'étant pas isolé avant de le faire réagir avec le composé précurseur d'un métal du groupe du platine.

2. Procédé selon la revendication 1, dans lequel M est choisi parmi le groupe constitué par le ruthénium, le rhodium, le palladium, l'osmium, l'iridium et le platine.

3. Procédé selon la revendication 1 ou 2, dans lequel chaque X est choisi de manière indépendante parmi le groupe constitué par un chlorure, un bromure, un iodure et un acétate.

4. Procédé selon l'une quelconque des revendications 1 à 3, dans lequel R¹ et R² sont choisis, de manière indépendante, parmi le groupe constitué par un groupe méthyle, un groupe éthyle, un groupe n-propyle, un groupe i-propyle, un groupe n-butyle, un groupe i-butyle, un groupe t-butyle, un groupe cyclopentyle, un groupe cyclohexyle, un groupe norbornyle et un groupe phényle.

5. Procédé selon l'une quelconque des revendications 1 à 4, dans lequel l'éther alkylique est un éther alkylique cyclique, de préférence le tétrahydrofuranne.

6. Procédé selon l'une quelconque des revendications 1 à 4, dans lequel l'éther alkylique est l'éther diéthylique ou l'éther méthyl-tert-butylique.

7. Procédé selon l'une quelconque des revendications 1 à 6, dans lequel l'alcane possède un point d'ébullition sous pression atmosphérique entre environ 0 °C et environ 150 °C.

8. Procédé selon l'une quelconque des revendications 1 à 7, dans lequel l'alcane est choisi parmi le groupe constitué par des isomères du pentane, des isomères de l'hexane, des isomères de l'heptane et des isomères de l'octane.

9. Procédé selon l'une quelconque des revendications 1 à 8, dans lequel le composé précurseur d'un métal du groupe du platine est choisi parmi le groupe constitué par MX₂, MX₂Lₙ et [MXLₙ]₂, dans lesquels M et X sont tels que définis à la revendication 1 ; et
lorsque n est égal à 1, L représente un ligand neutre bidenté ; ou
lorsque n est égal à 2, L représente un ligand neutre monodenté.

10. Procédé selon l'une quelconque des revendications 1 à 9, dans lequel l'étape (a) et l'étape (b) sont mises en oeuvre de manière indépendante à une ou plusieurs températures entre environ -10 °C et environ 40 °C.

11. Procédé selon l'une quelconque des revendications 1 à 8, dans lequel, après l'étape (a), le procédé comprend en outre le fait de :
(a') traiter le mélange réactionnel à une ou plusieurs reprises avec de l'eau.

12. Procédé selon l'une quelconque des revendications 1 à 11, comprenant en outre l'étape dans laquelle on prépare un complexe répondant à la formule (A') ou à la formule (B') : 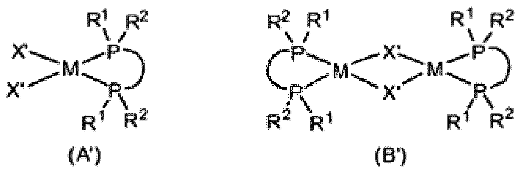 en échangeant de manière indépendante un ou plusieurs des groupes X par X' ;
dans lequel chaque X' représente un ligand anionique monodenté qui est différent du groupe X correspondant dans le complexe répondant à la formule (A) ou à la formule (B).

13. Procédé selon l'une quelconque des revendications précédentes, dans lequel le dihalogénoalcane répond à la formule Hal-(CR⁵R⁶)ₘ-Hal ;
dans laquelle Hal représente un halogénure ;
m est égal à 2, 3 ou 4 ; et
R⁵ et R⁶ sont choisis de manière indépendante parmi le groupe constitué par un atome d'hydrogène, un groupe alkyle en C₁-C₁₀ à chaîne droite, un groupe alkyle en C₃-C₁₀ à chaîne ramifiée et un groupe cycloalkyle en C₃-C₁₀.

14. Procédé selon la revendication 13, dans lequel le dihalogénoalcane est choisi parmi le groupe constitué par le 1,3-dichloropropane, le 1,4-dichlorobutane et le 1,3-dichlorobutane.
